# EUROPEAN PATENT APPLICATION

(11) **EP 4 521 477 A1**
(43) Date of publication of application: **12.03.2025**
(21) Application number: 24179902.2
(22) Date of filing: 04.06.2024
(51) Int. Cl.: H01M 4/04, H01M 4/1391, H01M 4/62

(54) **METHOD FOR MANUFACTURING DRY ELECTRODE**

(30) Priority: 05.09.2023 KR 20230117867
(71) Applicant: Samsung SDI Co., Ltd., Yongin-si, Gyeonggi-do 17084 (KR)
(72) Inventor: Kwon, Seunguk, Yongin-si, Gyeonggi-do (KR); Lee, Jinhyon, 17084 Yongin-si, Gyeonggi-do (KR); Pyun, Ahram, 17084 Yongin-si, Gyeonggi-do (KR); Kwon, Ilkyong, 17084 Yongin-si, Gyeonggi-do (KR); Bang, Seunggwon, 17084 Yongin-si, Gyeonggi-do (KR)
(74) Representative: Gulde & Partner

(57) **Abstract**

A manufacturing method of a dry electrode includes fiberizing a mixture including an active material, a conductive material, and a binder into a fiberized dry powder; first crushing and second crushing the dry powder into a minute powder; and calendering the minute powder into a free-standing film.

## Description

### BACKGROUND

### Field

Embodiments of the present disclosure relate to a manufacturing method of a dry electrode.

### Description of the Related Art

Generally, a rechargeable battery is a battery that can be repeatedly charged and discharged.

Recently, there is an increased need for a method of manufacturing dry electrodes for rechargeable batteries that do not use solvents.

In a conventional manufacturing method of a dry electrode, the dry electrode may be manufactured by fiberizing a mixture including an active material, a conductive material, and a binder to form a fiberized dry powder by using a kneading device, etc., calendering the fiberized dry powder to form a free-standing film by using a calendering roll, etc, and laminating the standing film to a current collector.

However, in the conventional dry electrode manufacturing method, the length of the fiberized binder included in the dry powder is not uniform, so the dry powder does not have a predetermined particle size distribution, so there is a problem in that the thickness and width of the free-standing film manufactured by the calendering are not uniform.

### SUMMARY

The present invention is set out in the appended set of claims, wherein the drawings and respective description relate to advantageous embodiments thereof.

An embodiment of the present disclosure provides a manufacturing method of a dry electrode in which dry electrode manufacturing efficiency is improved by uniform thickness and width of the free-standing film manufactured by the calendering.

A manufacturing method of a dry electrode includes fiberizing a mixture including an active material, a conductive material, and a binder into a fiberized dry powder; first crushing and second crushing the fiberized dry powder into a minute powder; and calendering the minute powder into a free-standing film.

In the minute powder, a particle ratio of 45 µm to 1000 µm may be 94wt% to 99wt%.

In the minute powder, a particle ratio of less than 45 µm and greater than 1000 µm may be 1 wt% to 6 wt%.

In the minute powder, a particle ratio of 45 µm to 1000 µm may be 96 wt% to 98 wt%.

In the minute powder, a particle ratio of less than 45 µm and greater than 1000 µm may be 2 wt% to 4 wt%.

The active material may be 96 wt% to 98 wt% of the mixture, the conductive material may be 0.1 wt% to 2 wt% of the mixture, and the binder may be 1 wt% to 3 wt% of the mixture.

The active material may include a metal oxide, the conductive material may include carbon black, and the binder may include polytetrafluoroethylene (PTFE).

In the calendering of the minute powder into the free-standing film, the free-standing film may be formed into the free-standing film at a calendering speed of 15 m/min to 30 m/min.

The first crushing and the second crushing may be performed for a crushing time of 30 min/kg to 45 min/kg depending on the weight of the dry powder.

The first crushing may be performed for a crushing time of 10 min/kg to 15 min/kg depending on the weight of the dry powder.

The second crushing may be performed for a crushing time of 15 min/kg to 45 min/kg depending on the weight of the dry powder.

The crushing time of the second crushing may be 100% to 300% of the crushing time of the first crushing.

The crushing time of the second crushing may be the same as the crushing time of the first crushing.

Pressing the free-standing film and laminating the free-standing film to a current collector may be further included.

The calendering of the minute powder into the free-standing film may include pressing the free-standing film and laminating the free-standing film to a current collector.

According to an embodiment, the manufacturing method of the dry electrode having improved dry electrode manufacturing efficiency is provided by uniformly forming the thickness and the width of the free-standing film manufactured by the calendering.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a flowchart showing a manufacturing method of a dry electrode according to an embodiment.
FIG. 2 is a diagram showing an example of a manufacturing method of a dry electrode according to an embodiment.
FIG. 3 is a diagram showing an example of a manufacturing method of a dry electrode according to an embodiment.
FIG. 4 is a table showing a result of a first experiment confirming an effect of a manufacturing method of a dry electrode according to an embodiment.
FIG. 5 is a table showing a particle size distribution of a minute powder according to a first crushing and a second crushing in a second experiment that confirmed an effect of a manufacturing method of a dry electrode according to an embodiment.
FIG. 6 is a table showing a result of a second experiment confirming an effect of a manufacturing method of a dry electrode according to an embodiment.

### DETAILED DESCRIPTION OF THE EMBODIMENTS

Embodiments of the present disclosure will be described more fully hereinafter with reference to the accompanying drawings, in which embodiments of the disclosure are shown

In addition, unless explicitly described to the contrary, the word "comprise," and variations such as "comprises" or "comprising," will be understood to imply the inclusion of stated elements but not the exclusion of any other elements.

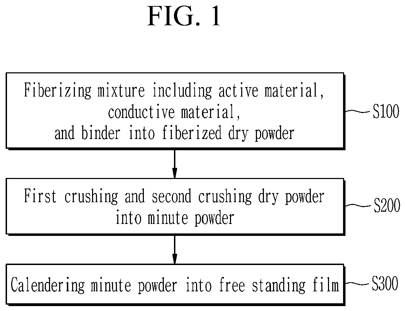

Hereinafter, a manufacturing method of a dry electrode according to an embodiment is described with reference to FIG. 1 to FIG. 3.

The manufacturing method of the dry electrode according to an embodiment may be a method for manufacturing a dry electrode for a rechargeable battery, but is not limited thereto and may be any suitable method for manufacturing various known dry electrodes.

Additionally, each of a fiberizing method, a crushing method, a calendering method, and a laminating method used in the manufacturing method of the dry electrode according to an embodiment may include various known methods.

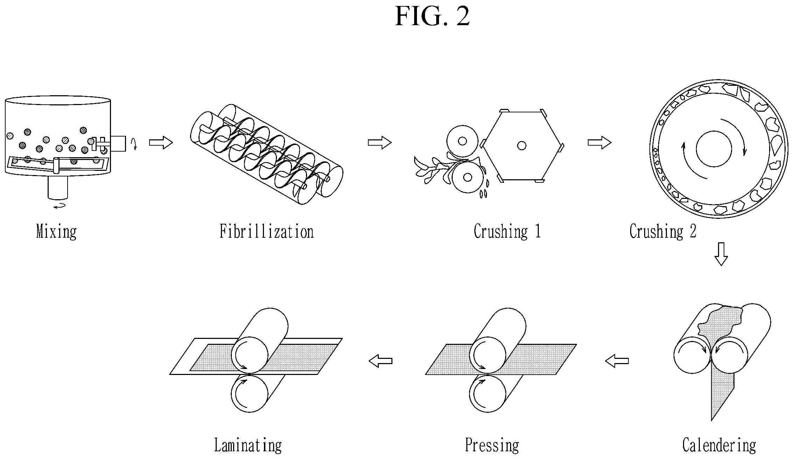

FIG. 1 is a flowchart showing a manufacturing method of a dry electrode according to an embodiment. FIG. 2 is a diagram showing an example of a manufacturing method of a dry electrode according to an embodiment.

Referring to FIG. 1 and FIG. 2, for example, a mixture including an active material, a conductive material (e.g., an electrically conductive material), and a binder is fiberized (e.g., fibrillized) into a fiberized (e.g., fibrillized) dry powder (S100).

Specifically, the active material, the conductive material, and the binder are mixed together into a mixture by using various known mixing methods, and the mixture is fiberized into a fiberized dry powder by using various known fiberizing methods.

For example, the active material may be 96 wt% to 98 wt% of the mixture, the conductive material may be 0.1 wt% to 2 wt% of the mixture, and the binder may be 1 wt% to 3 wt% of the mixture, but it is not limited thereto. The active material may include a metal oxide (e.g., a metal oxide series), the conductive material may include carbon black, and the binder may include polytetrafluoroethylene (PTFE), but it is not limited thereto.

In an embodiment, the active material may be 96wt% to 98wt% of the mixture, the conductive material may be 0.1wt% to 2wt% of the mixture, the binder may be 1wt% to 3wt% of the mixture, the active material includes a metal oxide series, the conductive material may include a carbon black, and the binder may include polytetrafluoroethylene, PTFE.

As another example, the active material included in the mixture may be 90 wt% to 99 wt% of the mixture, the conductive material may be 0.5 wt% to 9.5 wt% of the mixture, and the binder may be 0.5 wt% to 10 wt% of the mixture, but it is not limited thereto. The active material may include a variety of known electrode active materials including nickel cobalt aluminum (NCA), and the conductive material may include a variety of known conductive materials including at least one selected from Ketjenblack and carbon nanotubes, and the binder may include various known fiberizing binders including polytetrafluoroethylene (PTFE).

For example, the mixture may be fiberized into a fiberized dry powder by using a kneading device including a plurality of screws, but is not limited thereto and may be fiberized into a dry powder including a fiberized binder by using various known fiberizing methods.

Next, the dry powder is first ground (e.g., first crushing) and second ground (e.g., second crushing) into a minute powder (S200).

Specifically, the dry powder is first ground (Crushing 1) and then second ground (Crushing 2) by using a crushing method. The first crushing (Crushing 1) and the second crushing (Crushing 2) may be performed using various known crushing methods, and may be performed using different crushing methods or the same crushing method.

For example, the first crushing and the second crushing may each include a disintegration of the dry powder aggregated together by the fiberized binder into dispersed minute powders, but are not limited thereto.

For example, the first crushing and the second crushing may be performed for a crushing time of 30 min/kg to 45 min/kg depending on the weight of the dry powder supplied by the crushing methods, but it is not limited thereto. The first crushing may be performed for a crushing time of 10 min/kg to 15 min/kg depending on the weight of the dry powder. The second crushing may be performed for a crushing time of 15 min/kg to 45 min/kg depending on the weight of dry powder.

For example, the crushing time of the second crushing may be 100% to 300% of the crushing time of the first crushing. The crushing time of the second crushing may be the same as the crushing time of the first crushing.

For example, in the minute powder ground from the dry powder by the first crushing and the second crushing, a particle ratio of 45 µm to 1000 µm may be 94 wt% to 99 wt% based on 100 wt% of the minute powder. In the minute powder, a particle ratio of less than 45 µm and greater than 1000 µm may be 1wt % to 6 wt% based on 100 wt% of the minute powder.

As another example, in the minute powder ground from the dry powder by the first crushing and the second crushing, a particle ratio of 45µm to 1000µm may be 96wt% to 98wt% based on 100 wt% of the minute powder. In the minute powder, a particle ratio of less than 45µm and greater than 1000µm may be 2wt% to 4wt% based on 100 wt% of minute powder.

In some embodiments, the minute powder is calendered into a free-standing film (S300).

In some embodiments, the minute powder is supplied to a calendering methods, for example a calendering roll and calendered into the free-standing film.

For example, if calendering the minute powder into the free-standing film, the free-standing film may be formed at a film formation speed of 15 m/min to 30 m/min, but it is not limited thereto.

In some embodiments, the free-standing film is pressed.

In some embodiments, the free-standing film may be supplied to a pressing means such as a pressing roll to press and stretch the free-standing film.

In some embodiments, the free-standing film is laminated onto a current collector.

In some embodiments, the pressed free-standing film may be supplied to , for example a laminating roll together with a metal foil, which is a current collector, to laminate the free-standing film onto the current collector.

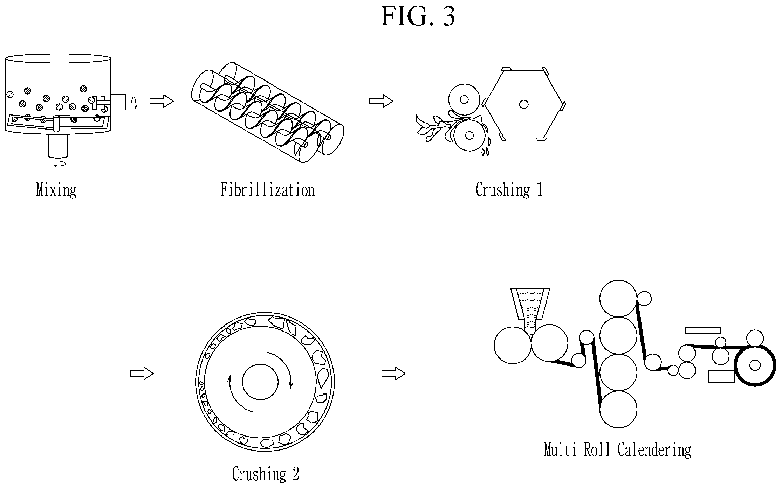

FIG. 3 is a diagram showing an example of a manufacturing method of a dry electrode according to an embodiment.

Referring to FIG. 3. as another example, a mixture including an active material, a conductive material, and a binder is fiberized into a fiberized dry powder.

In some embodiments, the dry powder is first ground and second ground into a minute powder.

In some embodiments, the minute powder is calendered into a free-standing film.

In some embodiments, the minute powder may be supplied to a , for example a multi-roll calendering device including, for example a calendering roll, a pressing roll, and a laminating roll to calender the minute powder into the free-standing film, the free-standing film may be pressed, and the free-standing film may be laminated onto the current collector.

The dry electrode may be manufactured by the manufacturing method of the dry electrode described above.

In the manufacturing method of the dry electrode according to an embodiment, the fiberized dry powder is first ground and second ground into the minute powder, and the minute powder is calendered to the free-standing film, so that the length of the fiberized binder included in the dry powder is uniformly ground by the first crushing and the second crushing, and the minute powder ground from the dry powder has a set or predetermined particle size distribution, and accordingly the free-standing film having uniform thickness and width may be manufactured by the calendering and concurrently (e.g. simultaneously) a film loss rate may be minimized or reduced during manufacturing of the free-standing film.

Also, in the manufacturing method of the dry electrode according to an embodiment, as the minute powder that is first ground and second ground from the fiberized dry powder includes a numerical limitation of the particle ratio of 45µm to 1000µm of 94wt% to 99wt% based on 100 wt% of the minute powder and the particle ratio of less than 45µm and greater than 1000µm of 1wt% to 6wt% based on 100 wt% of the minute powder, the minute powder ground from the dry powder has a set or predetermined particle size distribution, and accordingly the free-standing film having uniform thickness and width may be manufactured by the calendering and concurrently (e.g. simultaneously) a loss rate of the minute powder and a loss rate of the free-standing film may be minimized or reduced during the free-standing film manufacturing.

Also, in the manufacturing method of the dry electrode according to an embodiment, as the minute powder that is first ground and second ground from the fiberized dry powder includes a configuration of a threshold significance of a numerical limitation of the particle ratio of 45µm to 1000µm of 96wt% to 98wt% based on 100 wt% of the minute powder and the particle ratio of less than 45µm and greater than 1000µm of 2wt% to 4wt% based on 100 wt% of the minute powder, the minute powder ground from the dry powder has a set or predetermined particle size distribution, and accordingly the free-standing film having uniform thickness and width may be manufactured by the calendering and concurrently (e.g. simultaneously) a loss rate of the minute powder and a loss rate of the free-standing film may be minimized or reduced during the free-standing film manufacturing.

For example, the manufacturing method of the dry electrode that improves a dry electrode manufacturing efficiency by rendering the thickness and width of the free-standing film manufactured by the calendering uniform is provided.

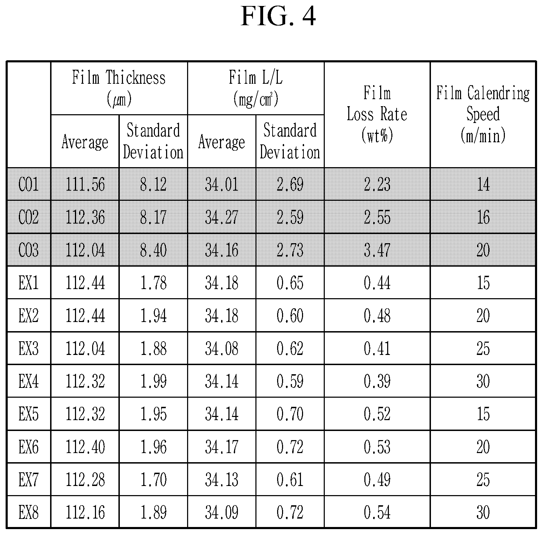

Hereinafter, experimental examples and comparative examples of confirming effects of the manufacturing method of the dry electrode according to an embodiment are described with reference to FIG. 4 to FIG. 6.

FIG. 4 is a table showing a result of a first experiment confirming an effect of a manufacturing method of a dry electrode according to an embodiment.

Referring to FIG. 4, an experimental example 1 EX1, an experimental example 2 EX2, an experimental example 3 EX3, an experimental example 4 EX4, an experimental example 5 EX5, an experimental example 6 EX6, an experimental example 7 EX7, an experimental example 8 EX8, a comparative example 1 CO1, a comparative example 2 CO2, and a comparative example 3 CO3 were prepared by using the manufacturing method of the dry electrode according to an embodiment, but it is not limited thereto.

### Experimental example 1

A mixture including 96wt% to 98wt% of an active material including a metal oxide, 0.1wt% to 2wt% of a conductive material including carbon black, and 1wt% to 3wt% of a binder including polytetrafluoroethylene (PTFE) was fiberized into a fiberized dry powder, the dry powder was first ground for a crushing time of 10min/kg and second ground for a crushing time of 20min/kg depending on the dry powder weight to form a minute powder. The minute powder was calendered at a film forming speed (a film calendering speed) of 15m/min to form a free-standing film having a width of 210mm. As an experimental result of experimental example 1 EX1, an average of a free-standing film thickness and a standard deviation, an average of a film loading level (a film UL) and a standard deviation, and a film loss rate are the same as the table shown in FIG. 4. Here, the film thickness is a thickness of a plurality of points in a film area of 210mm², the film loading level (film UL) is a mass of a plurality of areas in a film area of 210mm², and the film loss rate is a mass ratio of a portion outside a film width of 210mm. The portion of the free-standing film that exceeds the film width of 210mm may be trimmed and removed from the free-standing film.

### Experimental example 2 to experimental example 4

Experimental example 2 EX2, experimental example 3 EX3, and experimental example 4 EX4 are identical to experimental example 1 EX1 in all conditions except for the film formation speed (the film calendering speed). As an experimental result of experimental example 2 EX2, experimental example 3 EX3, and experimental example 4 EX4, the free-standing film thickness, the film loading level (film UL), and the film loss rate are the same as in the table shown in FIG. 4.

### Experimental example 5

Experimental example 5 EX5 is identical to experimental example 1 EX1 in all conditions except that the minute powder is calendered into the free-standing by film using a multi roll calendering device. As an experimental result of experimental example 5 EX5, the free-standing film thickness, the film loading level (film UL), and the film loss rate are the same as the table shown in FIG. 4.

### Experimental example 6 to experimental example 8

Experimental example 6 EX6, experimental example 7 EX7, and experimental example 8 EX8 are identical to experimental example 5 EX5 in all conditions except for the film formation speed (the film calendering speed). As an experimental result of experimental example 6 EX6, experimental example 7 EX7, and experimental example 8 EX8, the free-standing film thickness, the film loading level (film UL), and the film loss rate are the same as in the table shown in FIG. 4.

### Comparative example 1

A mixture including 96wt% to 98wt% of an active material including a metal oxide, 0.1wt% to 2wt% of a conductive material including carbon black, and 1wt% to 3wt% of a binder including polytetrafluoroethylene (PTFE) was fiberized into a fiberized dry powder, and the dry powder was calendered at a film forming speed of 14 m/min to form a free-standing film having a width of 210 mm. As an experimental result of comparative example 1 CO1, the free-standing film thickness, the film loading level (film UL), and the film loss rate are the same as in the table shown in FIG. 4. Here, the film thickness is a thickness of a plurality of points in a film area of 210mm², the film loading level is a mass of a plurality of areas in a film area of 210mm², and the film loss rate is a mass ratio of a portion outside a film width of 210mm.

### Comparative example 2 and comparative example 3

Comparative example 2 CO2 is the same as comparative example 1 CO1 in all conditions except for the film formation speed (the film calendering speed). Comparative example 3 CO3 is the same as comparative example 1 CO1 in all conditions except that the dry powder was calendered into the free-standing film by using a film formation speed (a film calendering speed) and a multi-roll calendering device. As an experimental result of comparative example 2 CO2 and comparative example 3 CO3, the free-standing film thickness, the film loading level (film L/L), and the film loss rate are the same as the table shown in FIG. 4.

### A first experimental result

As the first experimental result of experimental example 1 EX1, experimental example 2 EX2, experimental example 3 EX3, experimental example 4 EX4, experimental example 5 EX5, experimental example 6 EX6, experimental example 7 EX7 and experimental example 8 EX8 described above, compared with comparative example 1 CO1, comparative example 2 CO2, and comparative example 3 CO3, it was confirmed that the free-standing film thickness and the film loading level (film UL) are uniform, and the film loss rate is minimized or reduced in each of experimental example 1 EX1, experimental example 2 EX2, experimental example 3 EX3, experimental example 4 EX4, experimental example 5 EX5, experimental example 6 EX6, experimental example 7 EX7, and experimental example 8 EX8, in which the dry powder is first ground and second ground into the minute powder.

According to the first experimental result, in the manufacturing method of the dry electrode according to an embodiment, the fiberized dry powder is first ground and second ground into the minute powder, and the minute powder is calendered to the free-standing film, so that the length of the fiberized binder included in the dry powder is uniformly ground by the first crushing and the second crushing, and the minute powder ground from the dry powder has a set or predetermined particle size distribution, and accordingly the free-standing film having uniform thickness and width may be manufactured by the calendering and concurrently (e.g., simultaneously) a loss rate of the film may be minimized or reduced during the free-standing film manufacturing.

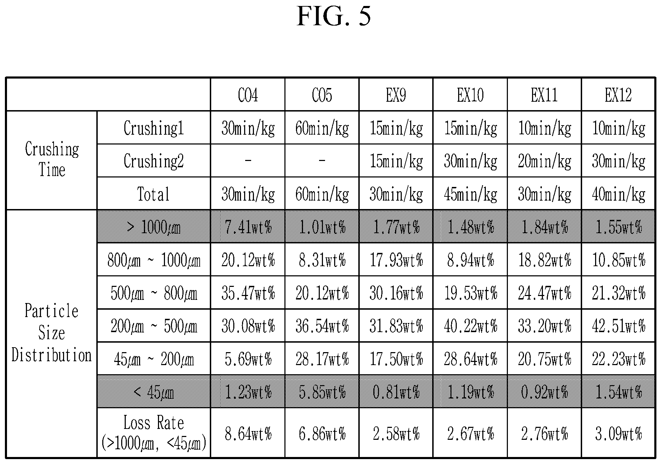

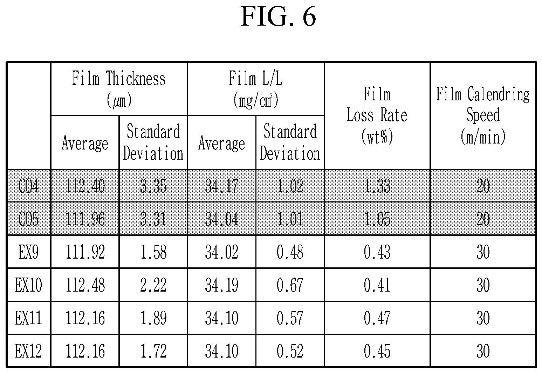

FIG. 5 is a table showing a particle size distribution of a minute powder according to a first crushing and a second crushing in a second experiment that confirmed an effect of a manufacturing method of a dry electrode according to an embodiment. FIG. 6 is a table showing a result of a second experiment confirming an effect of a manufacturing method of a dry electrode according to an embodiment.

Referring to FIG. 5 and FIG. 6, experimental example 9 EX9, experimental example 10 EX10, experimental example 11 EX11, experimental example 12 EX12, comparative example 4 CO4, and comparative example 5 CO5 may be performed by using the manufacturing method of the dry electrode according to an embodiment, but it is not limited thereto.

### Experimental Example 9

A mixture including 96wt% to 98wt% of an active material including a metal oxide, 0.1wt% to 2wt% of a conductive material including carbon black, and 1wt% to 3wt% of a binder including polytetrafluoroethylene (PTFE) was fiberized into a fiberized dry powder, and the dry powder is first ground (Crushing 1) for a crushing time of 15min/kg, and second ground (Crushing 2) for a crushing time of 15min/kg depending on the dry powder weight for a total crushing time of 30 min/kg to form a minute powder. The minute powder was calendered by using a multi-roll calendering device with a film calendering speed of 30m/min to form a free-standing film of 210mm width. As an experimental result of experimental example 9 EX9, a particle size distribution and a loss rate of the minute powder first ground and second ground from the dry powder are the same as in the table shown in FIG. 5. Here, the loss rate of the minute powder is a ratio of the particles having a particle size of less than 45µm and greater than 1000µm, if the particle size of the minute powder is less than 45µm and greater than 1000µm, the free-standing film may not be manufactured from the minute powder. For example, if the particle size of the minute powder is less than 45µm, it may pass between the calendering rolls and not be manufactured into a film, and if the particle size of the minute powder is more than 1000µm, it may not enter the calendering rolls and may be blocked and not manufactured into a film. Also, as an experimental result of experimental example 9 EX9, the average and the standard deviation of the free-standing film thickness, the average and the standard deviation of the film loading level (film UL), and the film loss rate are the same as in the table shown in FIG. 6. Here, the film thickness is a thickness of a plurality of points in a film area of 210mm², the film loading level is a mass of a plurality of areas in a film area of 210mm², and the film loss rate is a mass ratio of a portion outside a film width of 210mm. The portion of the free-standing film that exceeds the film width of 210mm may be trimmed and removed from the free-standing film.

### Experimental example 10 to experimental example 12

Experimental example 10 EX10, experimental example 11 EX11, and experimental example 12 EX12 are the same as experimental example 9 EX9 in all conditions except for the first crushing time and the second crushing time. In experimental example 10 EX10, the dry powder was first ground for a crushing time of 15min/kg, and second ground for a crushing time of 30min/kg depending on the dry powder weight for a total crushing time of 45min/kg to form a minute powder. In experimental example 11 EX11, the dry powder was first ground for a crushing time of 10min/kg, and second ground for a crushing time of 20min/kg depending on the dry powder weight for a total crushing time of 30min/kg to form a minute powder. In experimental example 12 EX12, the dry powder was first ground for a crushing time of 10min/kg, and second ground for a crushing time of 30min/kg depending on the dry powder weight for a total crushing time of 40min/kg to form a minute powder. As an experimental result of experimental example 10 EX10, experimental example 11 EX11, and experimental example 12 EX12, the particle size distribution and the loss rate of the minute powder first ground and second ground from the dry powder are the same as in the table shown in FIG. 5. Also, as an experimental result of experimental example 10 EX10, experimental example 11 EX11, and experimental example 12 EX12, the free-standing film thickness, the film loading level (film UL), and the film loss rate are the same as in the table shown in FIG. 6.

### Comparative example 4

A mixture including 96wt% to 98wt% of an active material including a metal oxide, 0.1wt% to 2wt% of a conductive material including carbon black, and 1wt% to 3wt% of a binder including polytetrafluoroethylene (PTFE) was fiberized into a fiberized dry powder, and the dry powder was ground once for a crushing time of 30min/kg according to the dry powder weight to form a minute powder. The minute powder was calendered using a multi-roll calendering device at a film calendering speed of 20m/min to form a free-standing film having a 210 mm width. As an experimental result of comparative example 4 CO4, the particle size distribution of the minute powder ground once from the dry powder, and the loss rate of the minute powder are the same as in the table shown in FIG. 5. Also, as an experimental result of comparative example 4 CO4, the free-standing film thickness, the film loading level (film UL), and the film loss rate are the same as in the table shown in FIG. 6.

### Comparative example 5

Comparative example 5 CO5 is the same as comparative example 4 CO4 except that the dry powder was ground once for a crushing time of 60min/kg depending on the dry powder weight to form a minute powder. As an experimental result of comparative example 5 CO5, the particle size distribution and the loss rate of the minute powder ground once from the dry powder are the same as in the table shown in FIG. 5. Also, as an experimental result of comparative example 5 CO5, the free-standing film thickness, the film loading level (film L/L), and the film loss rate are the same as in the table shown in FIG. 6.

### Result of second experiment

According to the result of the second experiment of experimental example 9 EX9, experimental example 10 EX10, experimental example 11 EX11, experimental example 12 EX12, comparative example 4 CO4, and comparative example 5 CO5, compared to comparative example 4 CO4 and comparative example 5 CO5 where the dry powder was ground once into the minute powder, it was confirmed that the free-standing film thickness and the film loading level (film UL) were uniform, and the film loss rate of the minute powder was minimized or reduced in each of experimental example 9 EX9, experimental example 10 EX10, experimental example 11 EX11, and experimental example 12 EX12 where the dry powder is first ground and second ground into the minute powder.

In addition, according to the result of the second experiment of experimental example 9 EX9, experimental example 10 EX10, experimental example 11 EX11, experimental example 12 EX12, comparative example 4 CO4, and comparative example 5 CO5 described above, in order to achieve the task and effect of ensuring that the free-standing film thickness and the film loading level are uniform and the film loss rate of the minute powder are minimized or reduced, in the manufacturing method of the dry electrode according to an embodiment, for a numerically limited configuration in which the ratio of the particles with the minute powder between 45µm and 1000µm is 94wt% to 99wt% based on 100 wt% of the minute powder, and the ratio of the particles with the minute powder less than 45µm and greater than 1000µm is 1wt% to 6wt% based on 100 wt% of the minute powder, it was confirmed that upper and lower limits have a threshold significance that may confirm that they are threshold values.

In addition, according to the result of the second experiment of experimental example 9 EX9, experimental example 10 EX10, experimental example 11 EX11, experimental example 12 EX12, comparative example 4 CO4, and comparative example 5 CO5 described above, in order to achieve the task and effect of ensuring that the free-standing film thickness and the film loading level are uniform and the film loss rate of the minute powder are minimized, in the manufacturing method of the dry electrode according to an embodiment, for a numerically limited configuration in which the ratio of the particles with the minute powder between 45µm and 1000µm is 96wt% to 98wt% based on 100 wt% of the minute powder, and the ratio of the particles with the minute powder less than 45µm and greater than 1000µm is 2wt% to 4wt% based on 100 wt% of the minute powder, it was confirmed that upper and lower limits have a threshold significance that may confirm that they are threshold values.

According to the second experimental result, in the manufacturing method of the dry electrode according to an embodiment, the fiberized dry powder is first ground and second ground into the minute powder, and the minute powder is calendered to the free-standing film, so that the length of the fiberized binder included in the dry powder is uniformly ground by the first crushing and the second crushing, and the minute powder ground from the dry powder has a set or predetermined particle size distribution, and accordingly the free-standing film having uniform thickness and width may be manufactured by the calendering and concurrently (e.g., simultaneously) a loss rate of the minute powder and a loss rate of the film may be minimized or reduced during the free-standing film manufacturing.

Also, according to the second experimental result, in the manufacturing method of the dry electrode according to an embodiment, as the minute powder that is first ground and second ground from the fiberized dry powder includes a numerical limitation of the particle ratio of 45µm to 1000µm of 94wt% to 99wt% 100 wt% of the minute powder and the particle ratio of less than 45µm and greater than 1000µm of 1wt% to 6wt% 100 wt% of the minute powder, the minute powder ground from the dry powder has a set or predetermined particle size distribution, and accordingly the free-standing film having uniform thickness and width may be manufactured by the calendering and concurrently (e.g., simultaneously) a loss rate of the minute powder and a loss rate of the film may be minimized or reduced during the free-standing film manufacturing.

Also, according to the result of the second experiment, in the manufacturing method of the dry electrode according to an embodiment, as the minute powder that is first ground and second ground from the fiberized dry powder includes a configuration of a threshold significance of a numerical limitation of the particle ratio of 45µm to 1000µm of 96wt% to 98wt% based on 100 wt% of the minute powder and the particle ratio of less than 45µm and greater than 1000µm of 2wt% to 4wt% based on 100 wt% of the minute powder, the minute powder ground from the dry powder has a set or predetermined particle size distribution, and accordingly the free-standing film having uniform thickness and width may be manufactured by the calendering and concurrently (e.g., simultaneously) a loss rate of the minute powder and a loss rate of the film may be minimized or reduced during the free-standing film manufacturing.

While the subject matter of this disclosure has been described in connection with what is presently considered to be practical embodiments, it is to be understood that the disclosure is not limited to the disclosed embodiments.

## Claims

1. A manufacturing method of a dry electrode comprising:
fiberizing a mixture comprising an active material, a conductive material, and a binder into a fiberized dry powder;
first crushing and second crushing the dry powder into a minute powder; and
calendering the minute powder into a free-standing film.

2. The manufacturing method of the dry electrode as claimed in claim 1, wherein:
in the minute powder, an amount of particles having a particle size of 45 µm to 1000 µm is 94wt% to 99wt%, based on 100 wt% of the minute powder.

3. The manufacturing method of the dry electrode as clamed in claim 1 or 2, wherein:
in the minute powder, a particle ratio of less than 45µm and greater than 1000µm is 1wt% to 6wt%, based on 100 wt% of the minute powder.

4. The manufacturing method of the dry electrode as clamed in claim 1, wherein:
in the minute powder, a particle ratio of 45µm to 1000µm is 96wt% to 98wt%, based on 100 wt% of the minute powder.

5. The manufacturing method of the dry electrode as clamed in claim 4, wherein:
in the minute powder, a particle ratio of less than 45µm and greater than 1000µm is 2wt% to 4wt%, based on 100 wt% of the minute powder.

6. The manufacturing method of the dry electrode as clamed in any of claims 1 to 5, wherein:
the active material is 96wt% to 98wt% of the mixture,
the conductive material is 0.1wt% to 2wt% of the mixture, and
the binder is 1wt% to 3wt% of the mixture.

7. The manufacturing method of the dry electrode as clamed in claim 6, wherein:
the active material comprises a metal oxide series,
the conductive material comprises a carbon black, and
the binder comprises polytetrafluoroethylene, PTFE.

8. The manufacturing method of the dry electrode as clamed in any of claims 1 to 7, wherein:
in the calendering of the minute powder into the free-standing film, the free-standing film is formed at a film calendering speed of 15m/min to 30m/min.

9. The manufacturing method of the dry electrode as clamed in any of claims 1 to 8, wherein:
the first crushing and the second crushing are performed for a crushing time of 30min/kg to 45min/kg.

10. The manufacturing method of the dry electrode as clamed in claim 9, wherein:
the first crushing is performed for a crushing time of 10min/kg to 15min/kg.

11. The manufacturing method of the dry electrode as clamed in claim 10, wherein:
the second crushing is performed for a crushing time of 15min/kg to 45min/kg.

12. The manufacturing method of the dry electrode as clamed in any of claims 1 to 11, wherein:
the crushing time of the second crushing is 100% to 300% of the crushing time of the first crushing.

13. The manufacturing method of the dry electrode as clamed in any of claims 1 to 12, wherein:
the crushing time of the second crushing is the same as the crushing time of the first crushing.

14. The manufacturing method of the dry electrode as clamed in any of claims 1 to 13, further comprising:
pressing the free-standing film; and
laminating the free-standing film to a current collector

15. The manufacturing method of the dry electrode as clamed in any of claims 1 to 14, wherein:
the calendering of the minute powder into the free-standing film comprises pressing the free-standing film and laminating the free-standing film to a current collector.
